# EUROPEAN PATENT APPLICATION

(11) **EP 2 741 156 A2**
(43) Date of publication of application: **11.06.2014**
(21) Application number: 13005531.2
(22) Date of filing: 28.11.2013
(51) Int. Cl.: G05B 19/4093, G05B 19/42

(54) **Machining method**

(30) Priority: 04.12.2012 GB 201221749
(71) Applicant: Rolls-Royce plc, London SW1E 6AT (GB)
(72) Inventor: Teo, Wee Kin, 797575 Singapore (SG); Yuen, Tao Pey, 638075 Singapore (SG); Yin, Lai Chow, 638075 Singapore (SG); Ming, Lim Tao, 638075 Singapore (SG); Subbiah, Sathyan, 639798 Singapore (SG)
(74) Representative: Routledge, John

(57) **Abstract**

A method of machining an article (10). The method comprises:
scanning the article (10) to determine an initial surface profile (14);
determining a cross sectional area (A) removed from the article (10) by a material removal tool (108) in a material removal pass under controlled conditions;
using the cross sectional area (A) to determine one or more material removal tool contact angles (θ) for at least one material removal pass by the material removal tool (108) under the controlled conditions required to conform the initial surface profile (14) to a nominal surface profile (16); and
machining the article (10) to conform the initial surface profile (14) to the nominal surface profile (16).

## Description

### Field of the Invention

The present invention relates to a method of machining an article. In particular, though not exclusively, the method relates to a method of machining a leading edge of an aerofoil blade.

### Background to the Invention

Articles such as fan blades may require a machining process in order to modify the surface of the article to conform to a nominal final profile, either during manufacture, or as part of a repair process for a damaged article. In one example, the leading edge of a gas turbine engine compressor or fan blade may become damaged in use as a result of contact with foreign object debris (FOD) during operation. A machining process is then employed to remove a portion of the leading edge to form or restore the shape of the leading edge. In some cases, the thickness tolerance for such a machining process may be approximately ±0.1 mm. Such articles may be made of any suitable material, for example metals such as titanium alloy, or composite materials such as carbon fibre reinforce plastic (CFRP).

In order to reduce labour, and therefore costs, it is desirable to automate the machining process. One option is to use a 5 axis Computer Numerical Controlled (CNC) machining tool. Such machines are capable of the required accuracy, but are slow and relatively expensive. 3 axis CNC machines are also available, but may not be capable of machining articles having complex shapes, such as fan blades. CNC machines also impart relatively large forces on the article, and so may not be appropriate where the article is relatively flexible or delicate, as this could lead to damage to the article or inaccurate machining.

Another option is to use robotic arms having 6 degrees of freedom. Robot arms having 6 degrees of freedom are capable of machining complex articles having curves in several planes, are quicker than conventional CNC machines, are may be cheaper. Robot arms with fewer degrees of freedom may also be used. Robot arms may be equipped with "force control", which ensures that forces imparted by the robot arm on the article are maintained at an appropriate level during machining. However, such robots do not have the required accuracy to machine articles to within the required tolerance using conventional machining methods.

The present invention provides a method of machining an article that seeks to overcome some or all of the aforementioned problems.

### Summary of the Invention

According to a first aspect of the present invention, there is provided a method of machining an article to conform the article to a nominal surface profile, the method comprising:
scanning the article to be machined to determine an initial surface profile;
using a material removal rate model to determine a cross sectional area removed from the article to be machined by a material removal tool in a material removal pass under controlled conditions;
using the determined cross sectional area to determine one or more material removal tool contact angles relative to a surface of the article for at least one material removal pass by the material removal tool under the controlled conditions required to conform the initial surface profile to the nominal surface profile; and
performing one or more material removal passes by the material removal tool at the one or more contact angles under the controlled conditions to conform the initial surface profile to the nominal surface profile.

Advantageously, the invention provides a method for accurately machining a surface profile of an article to conform to a nominal surface profile. In particular, the invention provides a method for machining the leading edge of fan blades to within a required tolerance, which may be ±0.1 mm. The invention relies on the discovery that the cross sectional area removed by the material removal tool on each pass under controlled conditions can be determined by a material removal rate model, which is not dependent on the initial surface profile of the article to be machined, and that this can be used to calculate the required contact angles for one or more material removal passes to conform the initial surface profile of the article to the nominal surface profile. Consequently, the position of the tool in some axes does not have to be as accurately controlled as in prior methods in order to accurately machine the article, provided the controlled conditions can be maintained, and the machining angles can be accurately controlled. Machines such as robot arms can therefore be used to perform the machining step. Fewer passes may also be required to conform the initial surface profile of the article to the nominal surface profile, thereby reducing the stresses imparted on the article, and reducing machining time and therefore costs.

The controlled conditions may comprise any of the contact force between the material removal tool and the article to be machined normal to the surface of the article to be machined, the feed rate of the material removal tool across the surface of the article to be machined, and the rotational speed of the material removal tool about a machine tool axis. Advantageously, since each of the contact force, feed rate and rotational speed of the material removal tool can be controlled more accurately (i.e. is more repeatable) than the position of the tool, the method can be used to more accurately machine the article compared to previous methods. On the other hand, the values of the respective controlled conditions may not need to be measured, provided the values of the controlled conditions are maintained during the machining process.

The material removal tool may comprise a rotary cutting tool.

The material removal rate model may comprise a constant area removed by a material removal pass under the controlled conditions, irrespective of the contact angle.

Alternatively, the material removal rate model may comprise a relationship between the contact width and the cross sectional area removed during a removal pass. The relationship between the contact width and the cross sectional area removed during a removal pass may be determined by performing a plurality of control passes, and determining the contact width between the material removal tool and the test article on each control path, and the cross sectional area removed at each cutting width.

The material removal rate model may comprise a relationship between a cutting profile and a maximum distance of the cutting profile from a notional line between points of the article where the contact width intersects with the surface profile.

The control material removal pass may be performed on a test article.

The test article may comprise the article to be machined. Alternatively, the test article may comprise a separate article to the article to be machined. Where the test article comprises a separate article, the test article may comprise the same material as the article to be machined, or may comprise a material having similar properties to the article to be machined, such as strength and ductility.

The step of determining the cross sectional area removed by a control material removal pass may comprise scanning the test article prior to the control pass to determine the initial test article surface profile, scanning the test article subsequent to the control pass to determine a machined test article surface profile, and comparing the initial and machined test article surface profiles.

The step of determining the cross sectional area may comprise performing a plurality of control passes at the same contact angle, and taking an average of the material removed by the plurality of control passes.

The step of determining the material removal tool contact angle for each respective material removal pass may comprise a contact angle search algorithm.

The contact angle search algorithm may comprise:
defining one or more test contact angles of the material removal tool relative to the surface profile of the article;
comparing each test contact angle to a surface profile to determine a respective cutting profile for each test contact angle;
comparing the respective cutting profile to the surface profile to determine a respective simulated cross sectional area removed by the respective cutting profile for each test angle;
using the material removal rate model to determine a cross sectional area which would be removed by the material removal tool from the article at the respective contact angle;
comparing each simulated cross sectional area to the cross sectional area determined by the material removal rate model; and
selecting one or more test contact angles which provide a simulated cross sectional area which substantially matches the cross sectional area determined by the material removal rate model area.

The search algorithm may further comprise comparing the respective cutting profile of the one or more selected contact angles to a nominal cross sectional profile to determine whether the respective cutting profile intersects the nominal cross sectional profile, and selecting a cutting profile that does not intersect with the nominal cross sectional profile.

The method may comprise using the selected cutting profile that does not intersect with the nominal cross sectional profile to generate a simulated machined cross sectional profile. The method may comprise comparing the simulated machined cross sectional profile to the nominal cross sectional profile and determining whether the simulated machined cross sectional profile conforms to the nominal cross sectional profile to within a predetermined tolerance. The method may comprise using the contact angle search algorithm to determine one or more further material removal tool contact angles for machining the simulated machined surface profile to generate one or more further machined surface profiles until the simulated machined surface profile conforms to the nominal cross sectional profile.

The article to be machined may comprise an aerofoil component, and may comprise a compressor or fan blade of a gas turbine engine.

According to a second aspect of the present invention there is provided an article machined in accordance with the first aspect of the invention.

According to a third aspect of the present invention there is provided a machining apparatus, the machining apparatus comprising:
a material removal tool and a controller, wherein the controller is configured to control the machine tool in accordance with the first aspect of the invention.

### Brief Description of the Drawings

Figure 1 shows machining apparatus and a fan blade of a gas turbine engine;
Figure 2 is a cross sectional view of initial and nominal surface profiles of the fan blade of Figure 1 through the line A-A;
Figure 3 is a process diagram of a method of machining an article;
Figure 4 is a perspective view of a test article undergoing a first step of a machining process;
Figures 5a and 5b 6a and 6b are views of a cross sectional profile of a simulated article having an initial and a machined surface profile respectively
Figures 6a to 6c are sectional views of the test article of Figure 3 before and after being machined at different contact angles;
Figures 7a to 7c are simplified sectional views of first, second and third article to be machined respectively before and after machining;
Figure 8 is a graph showing the relationship between the cutting width produced by a pass made by the machining apparatus of figure 1, and the cross sectional area removed during the pass;
Figure 9 is a cross sectional view of part of an article machined by a machining process, showing the shape of the cut produced by a material removal pass;
Figure 10 is a graph showing the relationship between the cutting width produced by a pass made by the machining apparatus of figure 1, and the height of a curved portion of the cutting profile;
Figure 11 is a cross sectional profile of a simulated article having an initial and a machined surface profile respectively; and
Figure 12 shows a machine tool path for machining the article of figure 1.

### Detailed Description

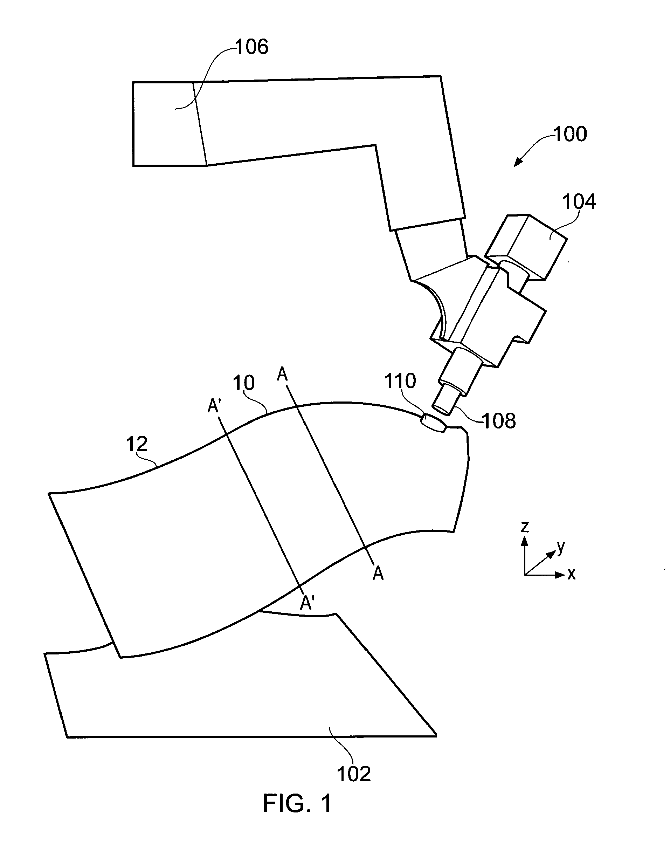

Figure 1 shows a fan blade 10 installed in a machining apparatus 100. The apparatus 100 comprises a fixture 102 for holding the blade 10 in position relative to an industrial robot comprising an arm 104. The arm 104 is movable in three dimensions (x, y, z) and is controlled by a controller 106. The controller 106 comprises motors (not shown) for moving the arm 104, and a programmable computer (not shown) having a memory containing instructions for moving the arm 104 using the motors. A tool in the form of an abrasive flap wheel 108 is provided at a distal end of the arm 104 on the end of a 6mm diameter shaft 109. The wheel 108 comprises a generally cylindrical head 110 comprising a plurality of radially extending planar flaps (not shown). Each flap comprises a compliant, abrasive surface such as silicon carbide. The head 110 is configured to rotate at high speed to remove material from a surface of an article, such as the blade 10.

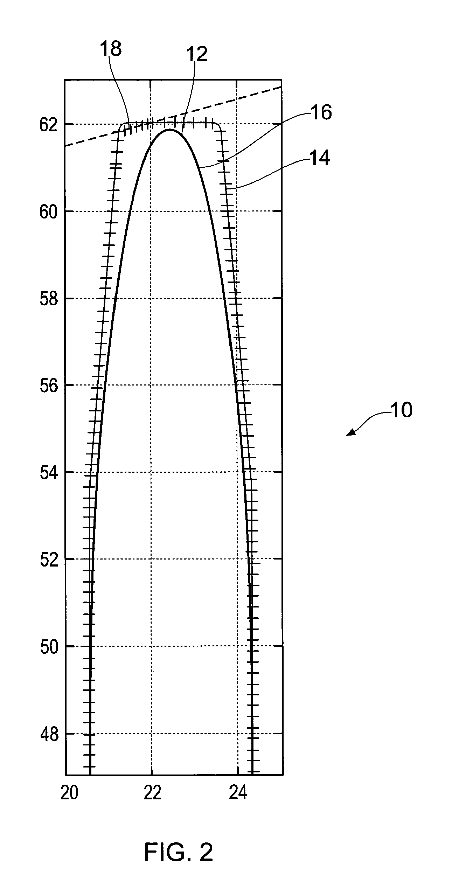

The blade 10 is formed of a titanium alloy or a carbon fibre reinforce plastic (CFRP), and forms part of a gas turbine engine (not shown). Other articles, such as other parts of a gas turbine engine such as compressor blades (not shown), could also be machined using the apparatus 100 and method described herein. The blade 10 comprises a leading edge region 12 extending from the leading edge of the blade 10 part way along the chord of the blade 10 towards the trailing edge. As shown in Figure 2, the leading edge region 12 comprises an aerofoil profile.

Figure 2 shows a blade 10 which has been subject to FOD, such that the blade 10 comprises an initial surface profile 14 which differs from a nominal surface profile 16. Consequently, the blade 10 will not be as aerodynamically efficient as a blade having the nominal surface profile 16, and may be subject to flutter in use. It is desirable to modify the initial surface profile 14 to conform the leading edge 12 to the nominal profile 16.

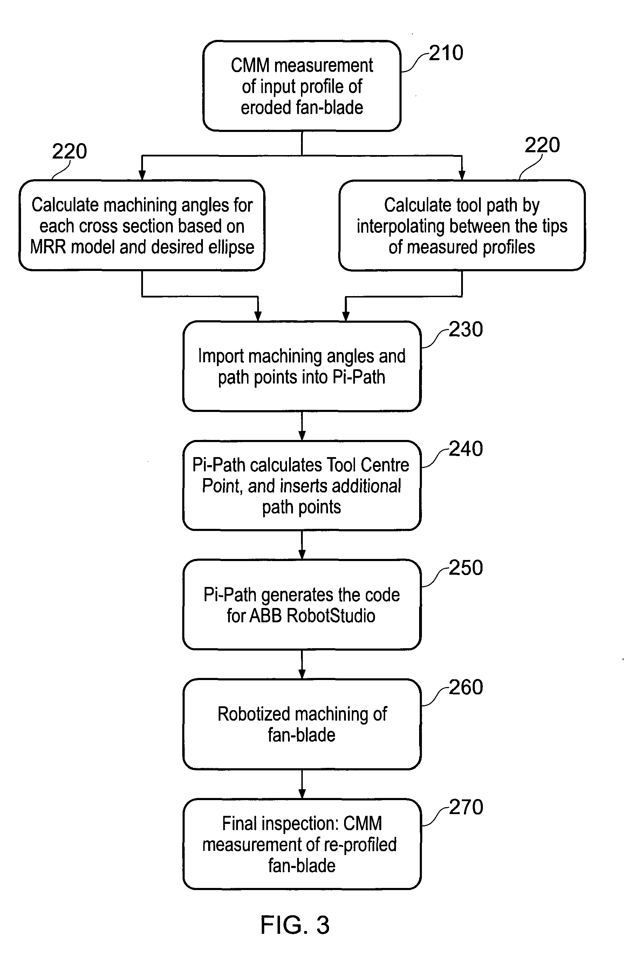

Figure 3 is a process diagram of a machining process for conforming the initial surface profile 14 of the blade 10 to the nominal surface profile 16.

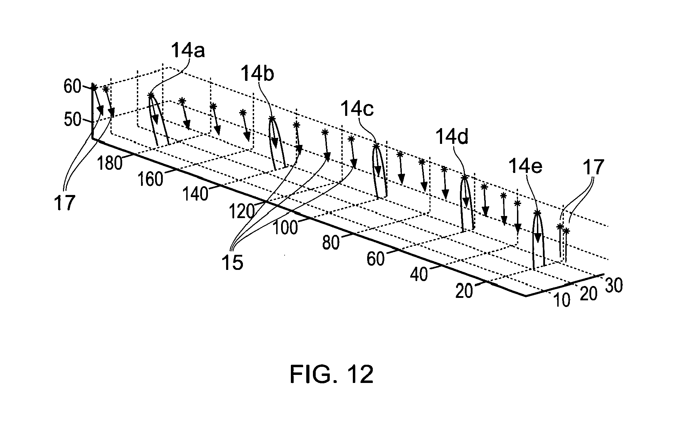

In a first step 210, the blade 10 is scanned using a coordinate measuring machine (CMM) (not shown) to determine the initial surface profiles 14 at a number of discreet points along the span of the blade (for example along lines A-A and A'-A' in Figure 1) before machining is to take place. Any suitable CMM could be used, provided that the system has a surface profile measurement accuracy to within 4 - 5 µm where the machining method is to be applied to the fan blade 10. In the described embodiment, initial surface profiles at five points along the longitudinal axis of the blade (points 14a-14e in Figure 12) are taken The scanned initial surface profiles 14 of the blade 10 are then stored in the memory of the controller 106.

In a second step 220, the machining angles θₙ to be used by the machining tool 108 for each scanned initial surface profile 14 are calculated using a material removal rate model to determine a cross sectional area A removed from the article 10 by the material removal tool 108 in a material removal pass under controlled conditions. Additional machining angles θₙ for the surface in between the scanned initial surface profiles 14 are determined by interpolating between the scanned initial surface profiles 14. A tool path comprising a series of robot arm 104 movements for providing the machining angles θₙ at each point on the surface is thereby determined by the interpolation.

In a third step 230, the machining angles θₙ and tool path coordinates for each point are imported into Pi-Path™ software. Other toolpath software could be used as appropriate. In a fourth step 240, a tool centre point is calculated by the Pi-Path software, and additional tool path coordinates 17 either side of the first and last initial surface profiles 14 are determined by further extrapolation. The additional tool path coordinates 17 provide "lead in" and "lead out" paths for the tool during the material removal pass.

In a fifth step 250, the path points are translated into robot arm instructions by ABB RobotStudio™ software. Other robot arm instruction software could be used as appropriate.

In a sixth step 260, the controller 106 is then used to control the robot arm 104 in accordance with the robot arm instructions to perform machining of the blade 10 to form a machined surface profile 18, such as that shown in Figure 2. Once the blade 10 is machined, a final CMM measurement of the machined fan blade profile 18 is made, and compared to the nominal blade profile 16 in a seventh step 270. If the machined fan blade profile 18 does not comply with the nominal blade profiles 16 at each cross section, the above process may be repeated. Alternatively or in addition, other additional finishing steps could be carried out on the blade 10.

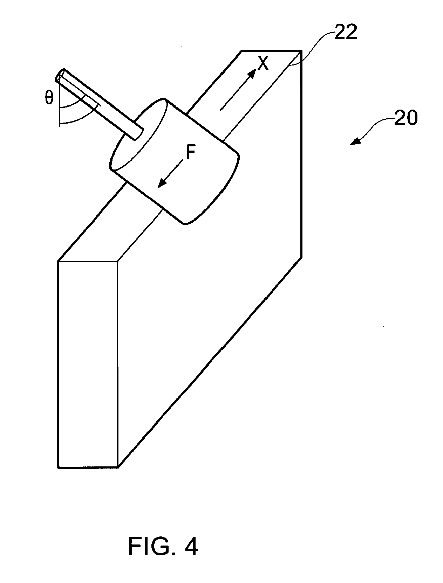

Figures 4, 5 and 6 provide one way of determining the material rate removal model. Figure 4 shows a test article 20. The test article 20 is formed of the same material as the article to be machined (i.e. in the case of the fan blade 10, titanium alloy). The test article 20 is generally cuboid, and has a right angled edge 22. In a first step, the initial surface profile of the test article 20 is determined by a CMM.

Once the initial surface profile of the test article 20 has been determined, a control material removal pass is undertaken using the machining apparatus 100, in which an edge 22 of the test article 20 is removed by the tool 108 by rotating the tool 108, and moving it in the direction X shown in Figure 4 while in contact with the edge 22.

During the or each control material removal pass, the rotational speed, direction, feed rate, contact force F normal to the surface of the article 20 which contacts the tool 108, and contact angle θ are kept constant. The contact angle θ is a machine tool parameter, and relates to the angle of the tool 108 relative to the test article 20. For example, the force F may be maintained at 40N. The force may be maintained at the constant force F by a conventional force control feedback mechanism. A plurality of control passes with the same machining parameters are performed to determine an average cross sectional area A removed by a material removal pass under controlled conditions. In some cases, a plurality of control passes are performed on a plurality of sections of the test article 20, or on a plurality of test articles 20 at the same machining parameters, but at different contact angles θ to determine a relationship between contact angle θ and the cross sectional area A removed in a material removal pass.

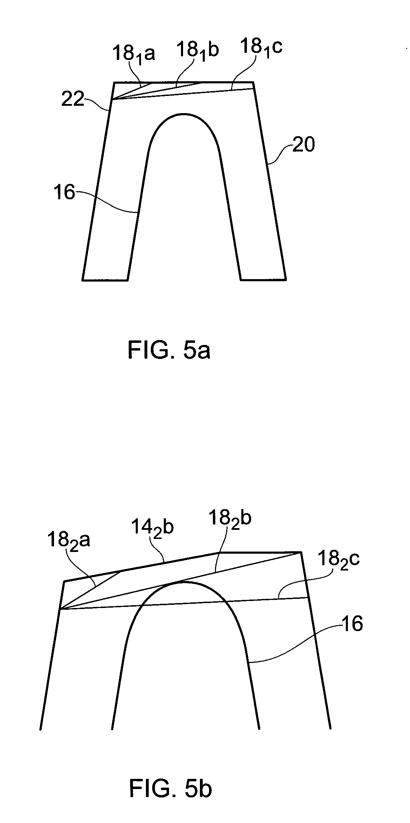

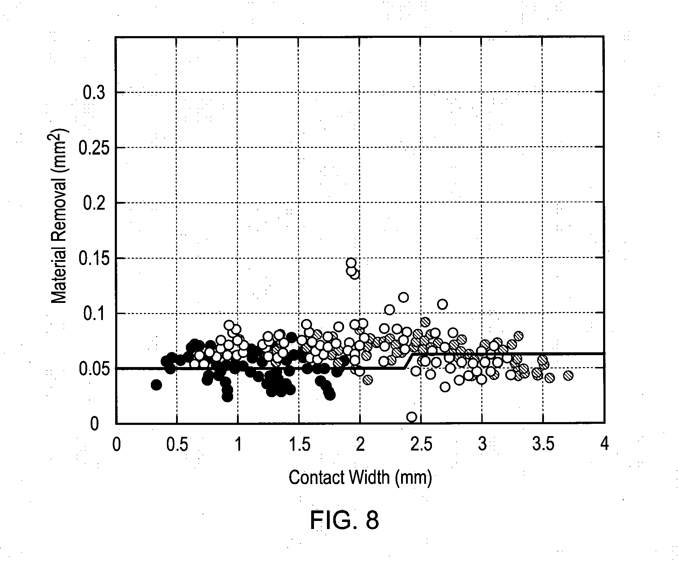

During the material removal pass, the material removal tool 108 removes an amount of material to form a machined surface profile 18 of the blade 10. The portion of the machined surface profile 18 which has had material removed during the machining pass (i.e. the part of the profile 18 that differs from the initial surface profile or previous machined surface profile 18) corresponds to a cutting profile. The cutting profile produced by each material removal pass generally approximates a straight line, (such as that shown in Figures 5a to 5c) but can in some cases have a slight curvature due to compliance of the tool 108 during the material removal pass (such as that shown in Figure 8).

After each control material removal pass, the machined test article 20 is scanned again by the CMM to determine the machined test article 20 surface profile 18 and cutting profile. The machined test article surface profile 18 is compared to the initial test article surface profile 14, or to the machined surface profile 18 of the previous material removal pass to determine the cross sectional area A removed for each control material removal pass. This may be determined by integrating the scanned surface initial surface profile 14 and machined surface profile 18 to determine the difference in area between the two profiles 14, 18. The cross sectional area A may be determined by plotting the cross sectional area A removed by each material removal pass against the contact angle θ to determine an average cross sectional area A removed by the material removal passes under the controlled conditions. The average cross sectional area A could be used to calculate the required contact angles θₙ for one or more material removal passes to conform the initial profile 14 to the nominal profile 16 at each cross section of the blade 10.

Alternatively or in addition, the machined test article surface profile 18 could be compared to the initial test article surface profile 14 or the immediately previous machined surface profile 18 to determine a cutting width α for each control material removal pass at each contact angle θₙ. The cutting width α is the length of a notional line between the points of the cutting profile that intersect the initial surface profile 14 or immediately previous machined surface profile 18, as shown in figure 8. The cross sectional area A removed at a given cutting width α may be determined by plotting the cross sectional area A removed against the cutting width α, and finding a relationship between the cutting width α and cross sectional area A removed during a material removal pass. In experiments using test articles comprising materials used in titanium alloy fan blades, the cross sectional area removed during a material removal pass having a contact width α less than 2.5mm is a first constant A₁ having a value of approximately 0.05mm², while the cross sectional area removed during a material removal pass having a contact width α greater than 2.5mm is a second constant A₂ having a value of approximately 0.06mm². The values of each constant, and the contact widths at which these values apply will vary depending on the machining parameters, and the machined material. The relationship between the cross sectional area removed and the cutting width may also have a different form under different conditions. For example, the relationship could be a linear or quadratic relationship.

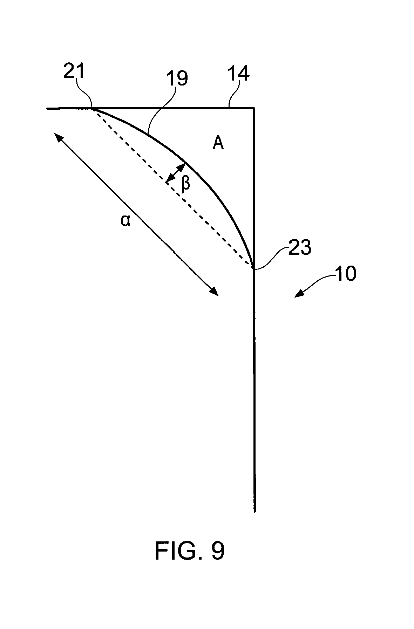

The machined test article surface profile 18 could also be compared to the initial test article surface profile 14 to determine a deviation β. The deviation β is the maximum distance of the cutting profile from the notional line extending between the points of the cutting profile that intersect the initial surface profile 14 or previous machined surface profile, as shown in Figure 8. The deviation β is a result of the compliance of the tool 108, which results in a slightly curved cutting profile. The value of β for a given control test pass can be obtained by comparing the scanned initial profile 14 to the machined profile 18 of the test article 20. The deviation β of the cutting profile has been found to generally increase linearly in proportion to the contact width α, as shown in figure 9. The material removal rate model may be further improved by performing a number of control material removal passes, and plotting the contact width α against the deviation β. The data can be analysed, and a relationship between the contact width α and the deviation β determined. For example, in the data shown in figure 9, the relationship comprises a first order polynomial relationship. The cutting profile deviation β is used to correct the material removal rate model, as explained in detail below.

Alternatively to the above, one or more control test passes could be conducted on the blade 10 itself. This may give more accurate values of A, α and β. However, this also risks removing too much material during the test material removal passes, since the amount of material removed during each pass is not yet known.

Once the material removal rate model has been determined, the contact angles θₙ required to conform the scanned initial surface profile 14 to the nominal surface profile 16 for each cross section of the blade 10 can be determined by applying a searching algorithm. The searching algorithm is applied to the initial surface profile 14 of the blade 10 using a computer, and does not involve any actual operation of the tool 108.

Figure 5a shows a diagrammatic representation of the operation of the search algorithm for finding a first contact angle θ₁ for machining the initial profile 14 of the blade 10. Once the blade 10 has been scanned to determine the initial surface profile 14 at each point, a first test contact angle θ₁ₐ is defined. The first test contact angle θ₁ₐ could take substantially any value. A preferred first contact angle θ₁ₐ could for example be the minimum contact angle θ that can be achieved using the tool 108.

The computer then determines a simulated machined surface profile 18a that would result from machining the article 10 at the test contact angle θ₁ₐ. The machined surface profile 18a is determined by plotting a notional line 18a from the edge 22 of the blade at which the cutting tool 108 would contact the blade 10 at the test contact angle θ₁ₐ.

The simulated machined surface profile 18 is then compared to the initial surface profile 14 to determine a first simulated cross sectional area removed that would result from machining the article 10 at the test contact angle θ₁ₐ. This can be determined by integrating the area enclosed by the simulated machined surface profile 18, and subtracting this from the initial surface profile 14.

The material removal rate model is then used to determine a cross sectional area A which would be removed by the material removal tool 108 from the article at the contact angle θ₁ₐ. In a first simplified material removal rate model, the cross sectional area is a constant determined by averaging the cross sectional area removed during a plurality of material removal passes under the controlled conditions, and is not therefore dependent on the contact angle θ.

The simulated cross sectional area is then compared to the cross sectional area A determined by the material removal rate model.

The above process is repeated for one or more contact angles θ₁. One or more test contact angles θ₁ which provides a simulated cross sectional area which substantially matches the cross sectional area A determined by the material removal rate model is selected.

For example, in the example shown in Figure 5a, the simulated cross sectional area of the simulated machined cross sectional profile 18b (i.e. the area between the initial profile 14 and the line 18b) matches the cross sectional area A determined by the material removal rate model, and so the angle θ which resulted in the cross sectional profile 18b is selected.

In general, several contact angles θ₁ may be selected by the above searching algorithm, since several contact angles θ will generally result in a simulated cross sectional area which substantially matches the cross sectional area A determined by the material removal rate model. The correct contact angle is further selected by comparing the simulated machined cross sectional profiles 18 which results from each selected test contact angle with the nominal cross sectional profile 16 to determine whether the selected simulated cross sectional profile 18 intersects the nominal cross sectional profile 16. The angle θ which results in a simulated cross sectional profile 18 that does not intersect with the nominal cross sectional profile 16 is then selected as the correct angle θ for the first material removal pass.

Once the correct contact angle θ has been selected, the correct simulated machined cross sectional profile 18 is compared to the nominal cross sectional profile 16 to determine whether the simulated machined cross sectional profile 18 conforms to the nominal cross sectional profile 16 to within a predetermined tolerance. This may be determined by measuring the distance between the simulated machined cross sectional surface profile 18 and the nominal cross sectional surface profile 16 at every point around the cross sectional surface profile. If the measured distance is less than a tolerance distance (in the present example, 5µm), then the simulated machined cross sectional profile 18 can be regarded as conforming to the nominal cross sectional profile 16 to within the predetermined tolerance, and the process can be repeated at a further point to determine the necessary angles at those points to conform the respective initial cross sectional profiles 14 to the nominal cross sectional profiles 16. However, where the measured distance exceeds the tolerance distance at any point, (as shown in the illustrated example in Figure 5a), a second and any subsequent contact angles for further material removal passes must be determined.

The second contact angle θ₂ is determined by repeating the above search algorithm using the selected simulated machined profile 18b as the new initial profile 14₂. Further test angles θ₂ₙ are chosen, and the corresponding simulated machined surface profiles 18_{2a-c} are determined. The search algorithm is applied to the simulated machined surface profiles18_{2a-c}, and a correct angle θ₂ which provides a simulated cross sectional area which matches the cross sectional area determined by the material removal rate model and provides a simulated cross sectional area that does not intersect with the nominal profile 16 is selected. The resulting machined cross sectional profile 18₂ is then compared to the nominal cross sectional profile 16, and further contact angles θₙ are determined until the final simulated machined cross sectional profile 18 conforms to the nominal cross sectional profile 16.

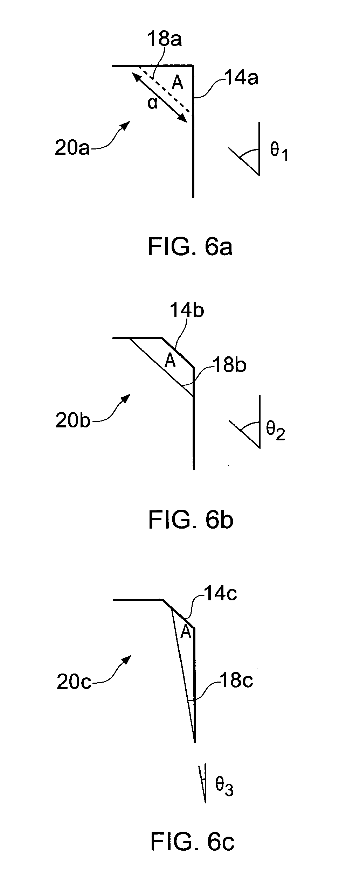

Figures 6a to 6c show different articles having different initial surface profiles 14a to 14c. In each case the article is machined at a different contact angle θ. However, the area removed by each material removal pass A is the same, irrespective of the initial profile 14, or the contact angle θ. This therefore shows that the area A can be substantially constant under some conditions, and the above method can therefore be used to determine the correct contact angles θ to conform any initial surface profile 14 to a nominal surface profile 16.

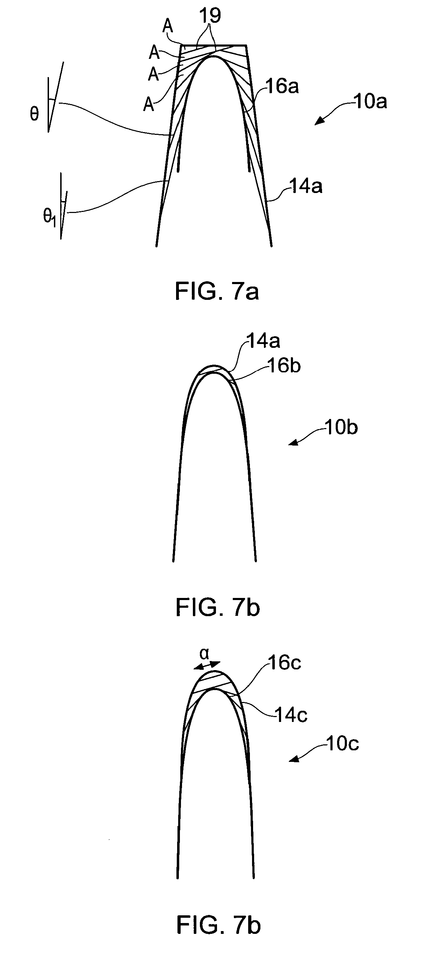

Figures 7a to 7c show further articles in the form of blades 10a to 10c having different initial surface profiles 14a to 14c, but the same nominal profile 16. Again, it can be seen that the same cross sectional area is removed on each material removal pass, and so the above method can be utilised to conform the respective initial surface profiles 14a to 14c to the nominal surface profile 16.

However, in some cases, the cross sectional area A removed by a material removal pass under controlled conditions is not constant, but is dependent on the contact width α. Whether or not this is the case can be determined during analysis of the control material removal passes to form the material removal rate model. The material removal rate model can be adjusted accordingly, by changing the value of A depending on the measured value of α for each simulated machined cross sectional profile 18.

Similarly, the simulated machined surface profile 18 can be corrected to take into account the deviation β by providing a corrected simulated cutting profile. The deviation is calculated for each simulated machined cross sectional profile 18, by applying the relationship between the contact width α and the deviation β to the measured contact width for the respective simulated machined cross sectional profile 18. As shown in Figure 8, a midpoint of the notional line between the points of the simulated cutting profile that intersect the initial surface profile 14 is found. The deviation β is determined by measuring the distance between the cutting profile and the midpoint of the notional line.

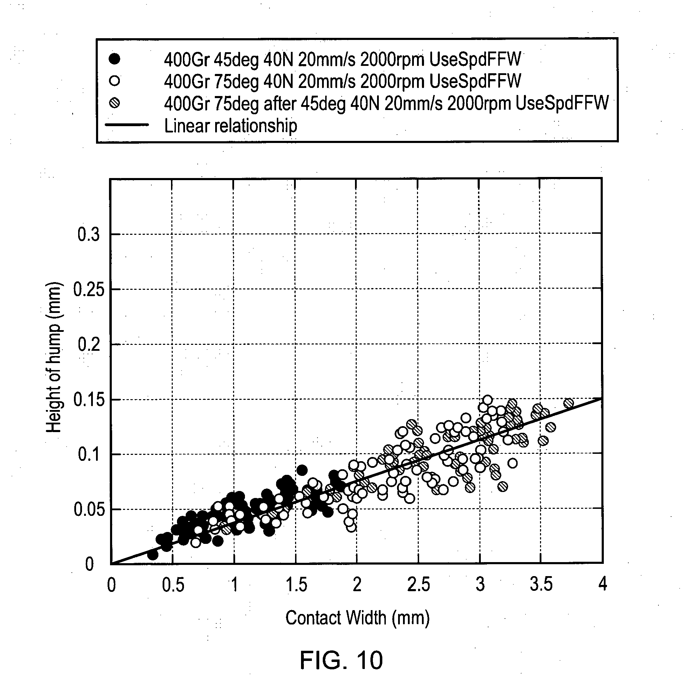

Once the deviation β has been determined, the simulated machined surface profile 18 can be updated to reflect the predicted area A removed for the respective contact width α. Figure 10 shows an improved simulated machined surface profile model which takes into account the deviation β to calculate the area A removed by a material removal pass which corresponds to a cutting width α.

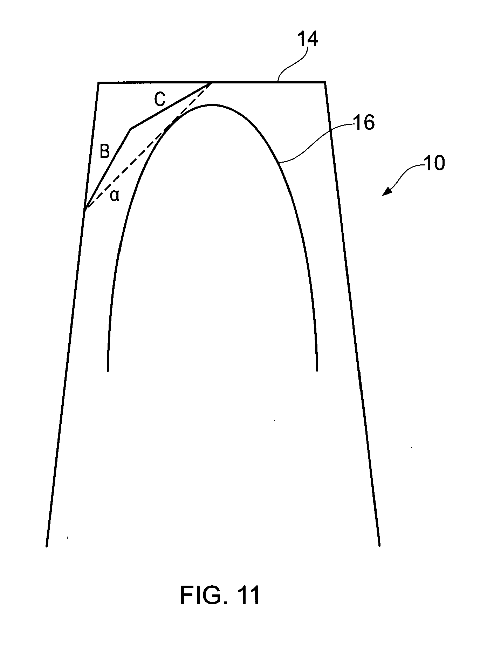

As shown in Figure 11, for each test angle θ₁ₙ, an equilateral triangle αBC is drawn. A first side α corresponds to the notional line having the cutting width calculated for the test angle θ₁ₙ. The other two sides correspond to the line between the deviation β at the midpoint, and the respective ends of the notional line. The profile formed between the initial surface profile 14 and the lines BC of the triangle αBC then forms the simulated machined surface profile 18. The simulated area A is then calculated by subtracting the corrected machined surface profile 18 from the initial surface profile 14. The simulated area A is then compared to the area A determined by the material removal rate model as before to determine whether the corrected simulated area corresponds to the area A determined by the material removal rate model.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

For example, although the above embodiments relate to an apparatus in which the article is mounted to a stationary fixture, and the article machined by a moving tool, the tool could alternatively be held stationary, and the article moved. The process could be applied to articles other than fan blades, or to article formed of different materials.

## Claims

1. A method of machining an article to conform the article to a nominal surface profile, the method comprising:
scanning the article to be machined to determine an initial surface profile;
using a material removal rate model to determine a cross sectional area removed from the article by a material removal tool in a material removal pass under controlled conditions;
using the determined cross sectional area to determine one or more material removal tool contact angles relative to a surface of the article for at least one material removal pass by the material removal tool under the controlled conditions required to conform the initial surface profile to a the nominal surface profile; and
performing one or more material removal passes by the material removal tool at the one or more contact angles under the controlled conditions to conform the initial surface profile to the nominal surface profile.

2. A method according to claim 1, wherein the controlled conditions comprise any of the contact force between the material removal tool and the article to be machined normal to the surface of the article to be machined, the feed rate of the material removal tool across the surface of the article to be machined, and the rotational speed of the material removal tool about a machine tool axis.

3. A method according to any of the preceding claims, wherein the material removal tool comprises a rotary cutting tool.

4. A method according to any of the preceding claims, wherein the material removal rate model comprises a constant area removed by a control material removal pass under the controlled conditions.

5. A method according to any claims 1 to 4, wherein the material removal rate model comprises a relationship between the contact width and the cross sectional area removed during a removal pass.

6. A method according to claim 5, wherein the material removal rate model comprises a relationship between a cutting profile and a maximum distance of the cutting profile from a notional line between points of the article where the contact width intersects with the initial surface profile.

7. A method according to any of the preceding claims, wherein a control material removal pass is performed on a test article comprising one of the article to be machined and a separate article to the article to be machined.

8. A method according to claim 7, wherein where the test article comprises a separate article, the test article comprises one of the same material as the article to be machined, and a material having similar properties to the article to be machined.

9. A method according to claim 7 or claim 8, wherein the step of determining the cross sectional area removed by a control material removal pass comprises scanning the test article prior to the control pass to determine an initial test article surface profile, scanning the test article subsequent to the control pass to determine a machined test article surface profile, and comparing the initial and machined test article surface profiles.

10. A method according to any of the preceding claims, wherein the step of determining the material removal tool contact angle for each respective material removal pass comprises a contact angle search algorithm, the contact angle search algorithm comprising the steps of:
defining one or more test contact angles of the material removal tool relative to the surface profile of the article;
comparing each test contact angle to a surface profile to determine a respective cutting profile for each test contact angle;
comparing the respective cutting profile to the surface profile to determine a respective simulated cross sectional area removed by the respective cutting profile for each test angle;
using the material removal rate model to determine a cross sectional area which would be removed by the material removal tool from the article at the respective contact angle;
comparing each simulated cross sectional area to the cross sectional area determined by the material removal rate model; and
selecting one or more test contact angles which provide a simulated cross sectional area which substantially matches the cross sectional area determined by the material removal rate model area.

11. A method according to claim 10, wherein the search algorithm further comprises comparing the respective cutting profile of the one or more selected contact angles to a nominal cross sectional profile to determine whether the respective cutting profile intersects the nominal cross sectional profile, and selecting a cutting profile that does not intersect with the nominal cross sectional profile.

12. A method according to claim 11, wherein the method comprises using the selected cutting profile that does not intersect with the nominal cross sectional profile to generate a simulated machined cross sectional profile, and the method comprises comparing the simulated machined cross sectional profile to the nominal cross sectional profile and determining whether the simulated machined cross sectional profile conforms to the nominal cross sectional profile to within a predetermined tolerance.

13. A method according to claim 12, wherein the method comprises using the contact angle search algorithm to determine one or more further material removal tool contact angles for machining the simulated machined surface profile to generate one or more further machined surface profiles until the simulated machined surface profile conforms to the nominal cross sectional profile.

14. An article machined in accordance with any of the preceding claims.

15. A machining apparatus, the machining apparatus comprising:
a material removal tool and a controller, wherein the controller is configured to control the machine tool in accordance with any of claims 1 to 14.
